# EUROPÄISCHE PATENTSCHRIFT

(11) **EP 3 190 387 B1**
(45) Veröffentlichungstag und Bekanntmachung des Hinweises auf die Patenterteilung: **05.09.2018**
(21) Anmeldenummer: 16195400.3
(22) Anmeldetag: 25.10.2016
(51) Int. Cl.: G01D 5/347, G01D 11/10

(54) **LINEARCODIERER**
LINEAR ENCODER
CODEUR LINÉAIRE

(30) Priorität: 07.01.2016 JP 2016001437
(43) Veröffentlichungstag der Anmeldung: 12.07.2017
(73) Patentinhaber: Dr. Johannes Heidenhain GmbH, 83301 Traunreut (DE)
(72) Erfinder: SHIMODA, Daisuke, Tokyo 102-0083 (JP); MOTOYUKI, Katsumi, Tokyo 102-0083 (JP); WATANABE, Yoshio, Tokyo 102-0083 (JP)

(56) Entgegenhaltungen:
- EP-A1- 1 436 633
- DE-A1- 2 305 708
- JP-A- H07 243 869
- US-A1- 2005 080 193

## Beschreibung

### GEBIET DER TECHNIK

Die vorliegende Erfindung betrifft einen Linearcodierer, mit dem eine genaue Positionsmessung ermöglicht wird und der für den Einsatz an Werkzeugmaschinen geeignet ist.

### STAND DER TECHNIK

Der grundlegende Aufbau eines Linearcodierers ist zum Beispiel aus der JP 2007-040873 A bekannt. Der Linearcodierer besteht aus einem Maßstab innerhalb eines Gehäuses und einer Abtast-Baueinheit. Die Abtast-Baueinheit umfasst einen Abtastkopf, der zur Abtastung des Maßstabs diesem gegenüber liegend angeordnet ist und in Messrichtung relativ zum Maßstab verschiebbar ist sowie aus einem Träger, an dem der Abtastkopf im Inneren des Gehäuses befestigt ist. Der Abtastkopf selbst wird über Führungselemente am Maßstab geführt. Der Träger ist über einen Mitnehmer mit einem außerhalb des Gehäuses angeordneten Montagefuß gekoppelt. Zwischen dem Träger und dem Mitnehmer ist eine Ausgleichskupplung vorgesehen, die den Abtastkopf an den Mitnehmer in Messrichtung steif und in Richtungen quer dazu nachgiebig koppelt.

Diese Ausgleichskupplung kann aufgrund von Spiel, insbesondere bei Richtungswechsel, Fehler bei der Positionsmessung hervorrufen.

Deshalb wurden Linearcodierer entwickelt, die ohne eine derartige Kupplung auskommen und bei denen der Abtastkopf nicht am Maßstab geführt wird. Ein derartiger Linearcodierer ist in der JP 2014-182054 A beschrieben. Da zwischen dem Träger und dem Abtastkopf keine Ausgleichskupplung vorhanden ist, können keine Umkehrfehler einer Kupplung die Positionsmessung negativ beeinflussen.

In der JP 2006-147989 A ist eine Belichtungsvorrichtung beschrieben, bei der ein Schwingungsdämpfer, bestehend aus einem elastischen Element und einer Dämpfermasse, eingesetzt ist.

In der DE 10 2008 060 839 A1 ist ein Drehgeber beschrieben, bei dem außen am stationären Gehäuse ein Schwingungsdämpfer angebracht ist. Der Schwingungsdämpfer besteht aus einem elastischen Element, an dem eine Dämpfermasse angebracht ist.

Die DE 2 305 708 A1 beschreibt eine schwingungsgedämpfte Wandlerkopfanordnung. Zur Dämpfung eines Wandlerkopfes, der an einem in Messrichtung verlaufenden Arm befestigt ist, ist eine in Messrichtung davon beabstandete freitragende Masse vorgesehen.

### ZUSAMMENFASSUNG DER ERFINDUNG

Die zu lösende Aufgabe ist die Bereitstellung eines Linearcodierers, mit dem hochpräzise Messungen ermöglicht werden.

Mit der Erfindung werden Messfehler vermieden und es ist eine stabile Messung möglich.

Die Erfinder der vorliegenden Erfindung haben herausgefunden, dass mechanische Schwingungen, die von dem zu messenden Objekt ausgehen, zu dem Abtastkopf übertragen werden. Durch den Mitnehmer kommt es zu einer Verstärkung der Schwingungen des Abtastkopfes und als Folge davon treten Messfehler auf. Außerdem wurde herausgefunden, dass es sogar zu einer Beschädigung des Mitnehmers und des Abtastkopfes kommen kann, wenn Resonanzerscheinungen auftreten.

Um diese Resonanzerscheinung zu verhindern, ist auch ein Aufbau denkbar, bei dem wie gemäß der JP 2007-040873 A zwischen dem Abtastkopf und dem Messobjekt eine ausgleichende Kupplung eingefügt wird, so dass die Schwingungen nicht übertragen werden. Doch nimmt dadurch, wie oben beschrieben, die Messgenauigkeit ab. Daher haben die Erfinder der vorliegenden Erfindung verschiedene Methoden zur Unterdrückung der Schwingungen der Abtastkopf geprüft und herausgefunden, dass dabei die Anordnung eines dynamischen Schwingungsdämpfers an dem Abtastkopf oder in dessen Nähe besonders wirksam ist.

Durch den Linearcodierer der vorliegenden Erfindung kann ein Linearcodierer bereitgestellt werden, wodurch insbesondere bei hochpräzisen Messungen unregelmäßig auftretende Messfehler verhindert werden und eine stabile Messung ermöglicht wird. Außerdem ist es auch möglich, ein Verhalten, das Störungen bei den Aufbauelementen, die den Linearcodierer bilden, hervorruft, selbst im Vorfeld zu verhindern.

Demgemäß umfasst die Erfindung einen Linearcodierer mit einem Maßstab innerhalb eines Gehäuses sowie eine Abtast-Baueinheit, die in Messrichtung relativ zum Maßstab verschiebbar ist, und die folgende Komponenten aufweist
- einen Abtastkopf, der zur Abtastung des Maßstabs diesem gegenüber liegend innerhalb des Gehäuses angeordnet ist,
- einen Träger an dem der Abtastkopf befestigt ist,
- einen Mitnehmer, über den der Träger mit einem außerhalb des Gehäuses angeordneten Montagefuß gekoppelt ist.

Erfindungsgemäß ist an dem Träger oder an dem Abtastkopf ein Schwingungsdämpfer angeordnet, der Schwingungen quer zur Messrichtung unterdrückt, wobei der Schwingungsdämpfer durch eine Dämpfermasse und ein elastisches Element gebildet ist, und wobei die Dämpfermasse mittels des elastischen Elementes an einer Anbringungsfläche des Trägers oder des Abtastkopfes befestigt ist.

Der Schwingungsdämpfer ist vorzugsweise geschützt innerhalb des Gehäuses angeordnet.

Indem der Abtastkopf nicht am Maßstab geführt ist und dadurch keinen Kontakt zum Maßstab hat (kontaktlos), kann die Verbindung zwischen dem Abtastkopf und dem Montagefuß ohne Ausgleichskupplung und somit in allen Richtungen relativ steif ausgeführt werden, was die Messgenauigkeit erhöht.

Insbesondere ist hierzu der Mitnehmer in Messrichtung verlaufend schwertförmig und biegesteif ausgebildet. In einer zweiten Richtung, die senkrecht zur Messrichtung verläuft, ist der Mitnehmer relativ dünn ausgeführt, da er in diesem Bereich durch die Öffnung des Gehäuses und durch die Lippendichtung hindurchgeführt werden muss. Dieser im Querschnitt relativ dünn ausgebildete Bereich des Mitnehmers bedingt eine Anfälligkeit für Querschwingungen, die mit der Erfindung gedämpft werden sollen. In vorteilhafter Weise ist deshalb das elastische Element derart angeordnet und ausgebildet, dass es eine Bewegung der Dämpfermasse in der zweiten Richtung freigibt. Die Anbringungsfläche ist dann eine Ebene, aufgespannt durch die Messrichtung und die zweite Richtung.

Ein besonders vorteilhafter Aufbau ergibt sich, wenn das elastische Element eine Klebstoffschicht zwischen dem Träger und der Dämpfermasse ist.

Der Klebstoff kann auf Acrylbasis sein und durch seine eigene Klebekraft an der Anbringungsfläche fixiert sein.

Ein kompakter Aufbau ist erreichbar, wenn der Schwingungsdämpfer an einer Stelle am Träger angeordnet ist, die in Bezug auf den Abtastkopf in Messrichtung längs gereiht ist.

Durch die derartige Bereitstellung des dynamischen Schwingungsdämpfers zumindest in der Nähe des Abtastkopfes wird eine Resonanzerscheinung der Abtast-Baueinheit, die den Abtastkopf aufweist, unterdrückt und könnnen ein Fehlbetrieb und Beschädigungen durch übermäßige Schwingungen verhindert werden.

Als Gegenmaßnahmen wären in Bezug auf den obigen Punkt auch andere mehrere Lösungsmöglichkeiten denkbar:
(1) Eine Absorption der Schwingungen durch Einfügen eines elastischen Elements zwischen dem Abtastkopf und dem Mitnehmer. Wie bereits erwähnt ist es jedoch für die Ausführung von hochpräzisen Messungen nicht ratsam zwischen dem Abtastkopf und dem Mitnehmer ein elastisches Element anzuordnen.
(2) Zur Erhöhung der Starrheit des Mitnehmers auch eine dicke Ausführung denkbar. Doch ist es zur Ausführung hochpräziser Messungen mit einer hohen Geschwindigkeit und einer hohen Beschleunigung erwünscht, dass der Gleitwiderstand des Mitnehmers möglichst gering ist. Darüber hinaus ist es schwierig, den Querschnitt des Mitnehmers zur Gewährleistung der Starrheit ausreichend groß zu gestalten.
(3) Es ist auch eine leichtgewichtige Ausführung des Abtastkopfes denkbar. Doch ist ein Abtastkopf für hochpräzise Messungen oft mit integrierter Signalverarbeitung und Überwachung erforderlich. Oft zwingt auch eine Standardisierung von Bauteilen die Verwendung vorhandener Abtastköpfe, die bereits bei anderen Linearcodierern verwendet werden.
(4) Es ist auch möglich, den Resonanzpunkt der Schwingungen, die von dem Messobjekt übertragen werden, mechanisch zu verschieben. Doch da die Schwingungsfrequenz, die die Resonanzerscheinung hervorbringt, in Abhängigkeit des vorhandenen Messobjektes, der Art des Linearcodierers verschiedenartig, so dass eine jeweilige Anpassung nicht praktikabel ist.

Als Maßnahme zur aktiven Schwingungsverhinderung ist es wirksam, einen dynamischen Schwingungsdämpfer zu verwenden. Der dynamische Schwingungsdämpfer bei der vorliegenden Erfindung ist durch Kombinieren einer Dämpfermasse und eines elastischen Elements gebildet.

Als Dämpfermasse ist ein anorganisches Material wie etwa ein Metall mit einer vergleichsweise hohen Dichte, Glas, Keramik oder dergleichen einsetzbar. Bevorzugt ist insbesondere ein Metall wie Eisen, Edelstahl, Kupfer, Messing, Blei, Zinn, Titan, Wolfram, Molybdän oder dergleichen oder eine Legierung, wofür zwei oder mehr der genannten Metalle verwendet werden. Ein Metall hat den Vorteil, dass die Bearbeitung leicht ist und die Regulierung der Masse einfach ist. Für die Masse der Dämpfermasse bestehen im Wesentlichen keine Einschränkungen, es reicht aus, wenn sie mit den zu unterdrückenden bzw. abzuschwächenden Resonanzeigenschaften abgestimmt auf die ideale Masse reguliert wird. Bei üblichen Abtastköpfen genügt eine Regulierung auf einen Bereich von 1 bis 100 g und vorzugsweise 8 bis 80 g. Auch wenn die Abschwächungseigenschaften in einem gewissen Maße geopfert werden, ist es nötig, dass es eine solche Größe aufweist, dass es in dem Gehäuse aufgenommen werden kann. Auch die Form ist nicht beschränkt, doch ist eine allgemeine Blockform wie etwa ein Hexaeder bevorzugt und ist die Ausführung einer Form, bei der eine Verklebefläche mit dem elastischen Element in einem Bereich von 1/10 bis 1/6 der Gesamtfläche gewährleistet werden kann, günstig. Um die Schwingbewegung der Dämpfermasse zu erleichtern, kann die Flächenabmessung der Verklebefläche bewusst klein gestaltet werden oder ist es auch möglich, zum Beispiel in der Seitenfläche eine Abstufung zu bilden und den Außenumfang des Seitenbereichs der Dämpfermasse in der Nähe der Verklebefläche so auszuführen, dass er klein wird.

Das elastische Element, das mit der Dämpfermasse den dynamischen Schwingungsdämpfer bildet, wird auch als klebendes elastisches Element bezeichnet. Obwohl im Wesentlichen keine Beschränkungen bestehen, ist ein Material auf Basis eines natürlichen oder eines synthetischen Elastomers bevorzugt. Da ihm auch die Funktion als klebendes Element verliehen ist, wirkt es selbst als Klebstoff und kann die Dämpfermasse dadurch fixiert werden. Konkret können Klebstoffe auf Naturkautschukbasis, wofür einem Naturkautschuk ein Klebrigmacher beigegeben wurde, Klebstoffe auf Silikonbasis, Klebstoffe auf Urethanbasis, Klebstoffe auf Acrylbasis und dergleichen angeführt werden, wobei Klebstoffe auf Acrylbasis, die über eine hervorragende Witterungsbeständigkeit, Wärmebeständigkeit, Lösemittelbeständigkeit und dergleichen verfügen und womit die erforderlichen Dämpfungseigenschaften leicht erhalten werden können, bevorzugt sind. Da Klebstoffe auf Naturkautschukbasis zwischen den Molekülen ungesättigte Bindungen aufweisen, verlieren sie unter Vorhandensein von Sauerstoff oder Licht leicht an Qualität. Klebstoffe auf Silikonbasis verfügen zwar über eine hervorragende Wärmebeständigkeit, chemische Beständigkeit und witterungsbeständige Niedertemperatureigenschaften, doch ist ihre Klebekraft nicht hoch und sind sie teuer. Auch Klebstoffe auf Urethanbasis weisen das Problem einer schwachen Klebekraft auf.

Bei Klebstoffen auf Acrylbasis wird durch eine Copolymerisation von Acrylmonomeren ein Acrylpolymer synthetisiert, dem die als Klebstoff erforderliche Funktion verliehen ist. Bei der Synthese des Klebstoffs sollten die Acrylmonomere unter Berücksichtigung der Haftfähigkeit des synthetisierten Acrylpolymers, des Glasübergangspunkts (Tg), der die Verwendbarkeitstemperatur und dergleichen beeinflusst, der Einbringung eines Vernetzungspunkts, der die Haltbarkeit, die Wärmebeständigkeit und dergleichen beeinflusst, und der Copolymerisierbarkeit der Acrylmonomere, die die Gleichmäßigkeit des Acrylpolymers und des Vernetzungspunkts beeinflusst, gewählt werden.

Als konkrete Acrylmonomere können für die Hauptmonomere Ethylacrylat, Butylacrylat, 2-Ethylhexylacrylat, Isononylacrylat und dergleichen angeführt werden, und für die Comonomere als Monomere, die zur Erhöhung der Kohäsionskraft verwendet werden, Vinylacetat, Acrylnitril, Acrylamid, Styrol, Methylmethacrylat, Methylacrylat und dergleichen angeführt werden, und als Monomere mit funktionalen Gruppen zur Einbringung eines Vernetzungspunkts Acrylsäure, Hydroxyethylacrylat, Acrylamid, Glycidylmethacrylat und dergleichen angeführt werden. Unter diesen Materialien sollte das idealste Material gewählt werden, doch können neben den oben angeführten Monomeren je nach Notwendigkeit auch geeignete Monomere verwendet werden und Beigabemittel hinzugefügt werden, die verschiedene weitere Funktionen verleihen oder ergänzen.

Was die Dicke des elastischen Elements betrifft, genügt eine Dicke, die die für die Dämpfung erforderliche Schwingbewegung, Schwenkbewegung bzw. Bewegung der Dämpfermasse nicht beeinträchtigt und überdies Schwingungen absorbieren kann, wobei eine Regulierung auf die ideale Dicke erfolgen sollte. Es bestehen zwar Unterschiede je nach dem Material und der Härte und dergleichen, doch liegt die Dicke zum Beispiel im Fall eines Materials auf Acrylbasis vorzugsweise in einem Bereich von 0,05 bis 5 mm und noch besser in einem Bereich von 0,1 bis 2 mm. Die für das elastische Element erforderliche Klebefähigkeit sollte ein Klebrigkeitsgrad sein, bei dem eine Fixierung an der Verklebefläche des Objekts, an dem die Fixierung erfolgt, mit einer ausreichenden Stärke möglich ist. Die Klebrigkeit sollte in einem solchen Ausmaß verliehen werden, dass die verlangte Elastizität nicht beeinträchtigt wird. Als allgemeine Klebrigkeit sind konkret bei Raumtemperatur in einem 180-Grad-Haftkraftversuch (ASTM D3330 Peel Adhesion) wenigstens 10 N/10 mm bevorzugt und insbesondere wenigstens 12 N/10 mm günstig. Für das elastische Element kann beispielsweise auch die Klebeschicht eines handelsüblichen Klebebands verwendet werden.

Der dynamische Schwingungsdämpfer ist so gebildet, dass die Dämpfermasse und das elastische Element in Bezug auf das Objekt, an dem die Fixierung erfolgt, aufeinander geschichtet angeordnet sind. Dabei erfolgt die Anordnung so, dass das elastische Element zwischen dem Objekt, an dem die Fixierung erfolgt, und die Dämpfermasse eingefügt wird und beide verklebt und fixiert werden.

Die Schwingungen, die der dynamische Schwingungsdämpfer der vorliegenden Erfindung dämpft, sind Schwingungen in der Querrichtung in Bezug auf die Betriebsrichtung (Messrichtung) des Abtastkopfes, und Schwingungen in der Parallelrichtung in Bezug auf die Maßstabebene. Dabei ist es die Verbindungsstelle zwischen dem Mitnehmer und dem Träger, die zu dem Drehpunkt des Trägers wird, und es wird angenommen, dass der Träger mit diesem Bereich als Zentrum schwingt. Daher handelt es sich wohl nicht um ein vollständiges Querschwanken, sondern um ein Rollen, das eine Drehung in Bezug auf die Bewegungsachse (Messrichtung X) begleitet. Die durch den dynamischen Schwingungsdämpfer erhaltene Wirkung zur Steuerung der Schwingungen unterscheidet sich zwar je nach den Materialien und Massen, die für die Dämpfermasse und das elastische Element verwendet werden, kann die Schwingungen aber bei einer Untersuchung durch die Beschleunigung (m/s²) vorzugsweise auf 1/6 und noch besser auf 1/10 drücken.

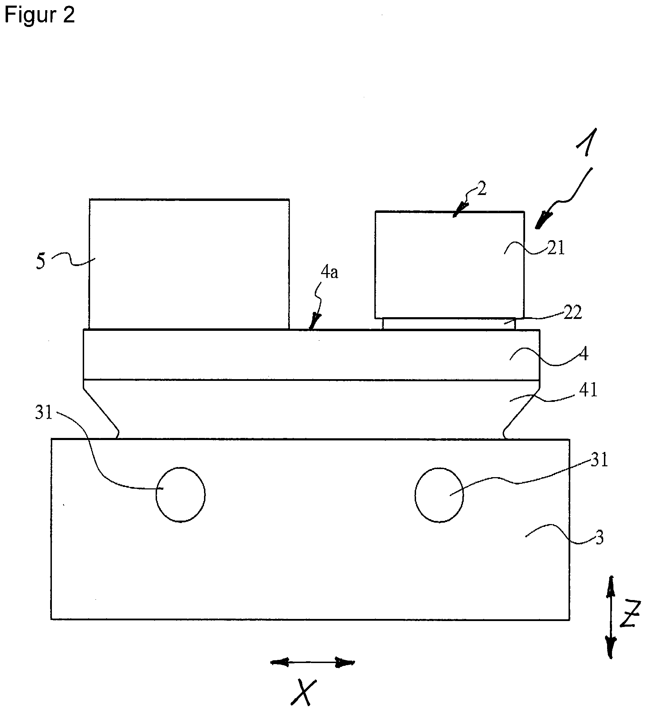

Was die Fixierungsstelle des dynamischen Schwingungsdämpfers betrifft, ist es nötig, dass sie möglichst nahe an dem Abtastkopf, die das Hauptsystem darstellt, liegt und überdies eine möglichst hohe Stelle ist- in Bezug auf die in Figur 2 dargestellte Lageorientierung. Daher ist zwar auch eine direkte Fixierung an dem Abtastkopf denkbar, doch damit keinerlei Gefahr einer nachteiligen Beeinflussung des Abtastkopfes besteht, und von dem Gesichtspunkt der Wartung her, sollte er an einer von dem Abtastkopf getrennten Stelle fixiert werden. Konkret handelt es sich um eine Stelle, die in Bezug auf die Bewegungsrichtung des Abtastkopfes längs gereiht angeordnet ist, und er sollte in dem freien Raum auf dem Träger angeordnet werden. Bei einer derartigen Stelle ist eine problemlose Unterbringung in dem Gehäuse möglich. Das heißt, es ist erwünscht, ihn an der oberen Fläche des Trägers oder an einem Aufbau, der auf dem Träger angeordnet ist, oder an der oberen Fläche eines Gehäuses, das diese Elemente abdeckt, anzubringen.

Eine direkte Anbringung des Schwingungsdämpfers an dem Abtastkopf ist ebenfalls möglich. Doch müssen in einem solchen Fall auch Überlegungen hinsichtlich der Verhinderung eines Abfallens und eines Sicherheitsmechanismus im Fall eines Abfallens angestellt werden. Der Abtastkopf umfasst zum Beispiel ein Leuchtelement und ein Lichtempfangselement und wandelt ein auf dem Maßstab gebildetes Muster in elektrische Signale um. Es gibt den Transmissionstyp, bei dem das Leuchtelement und das Lichtempfangselement einander über den Maßstab hinweg gegenüberliegend angeordnet sind, und den Reflexionstyp, bei dem sie an nur einer Seite angeordnet sind. Die vorliegende Erfindung kann bei beiden Arten angewendet werden, doch ist auch ein Magnettyp oder ein Induktionstyp möglich. Der genaue Aufbau dieser Feststelleinheiten kann der allgemein bekannten Literatur leicht entnommen werden.

### BESCHREIBUNG DER ZEICHNUNGEN

Es zeigt
- Figur 1: einen Querschnitt eines Linearcodierers nach der vorliegenden Erfindung;
- Figur 2: eine Seitenansicht der Abtast-Baueinheit des Linearcodierers gemäß Figur 1;
- Figur 3: ein Diagramm, das die Abhängigkeit der Schwingungsbeschleunigung der Abtast-Baueinheit in Bezug auf die Anregungsfrequenz bei einem Anregungsversuch darstellt.

### BESCHREIBUNG EINER AUSFÜHRUNGSFORM

Der Linearcodierer weist eine Abtast-Baueinheit 1 auf, die zur Positionsmessung in Messrichtung X relativ zu einem in einem Gehäuse 10 untergebrachten Maßstab 6 verschiebbar ist. Zur Positionsmessung wird das Gehäuse 10 mit dem darin angeordneten Maßstab 6 an einem ersten Maschinenteil befestigt und die Abtast-Baueinheit 1 an einem zweiten Maschinenteil befestigt, dessen Position relativ zum ersten Maschinenteil gemessen werden soll.

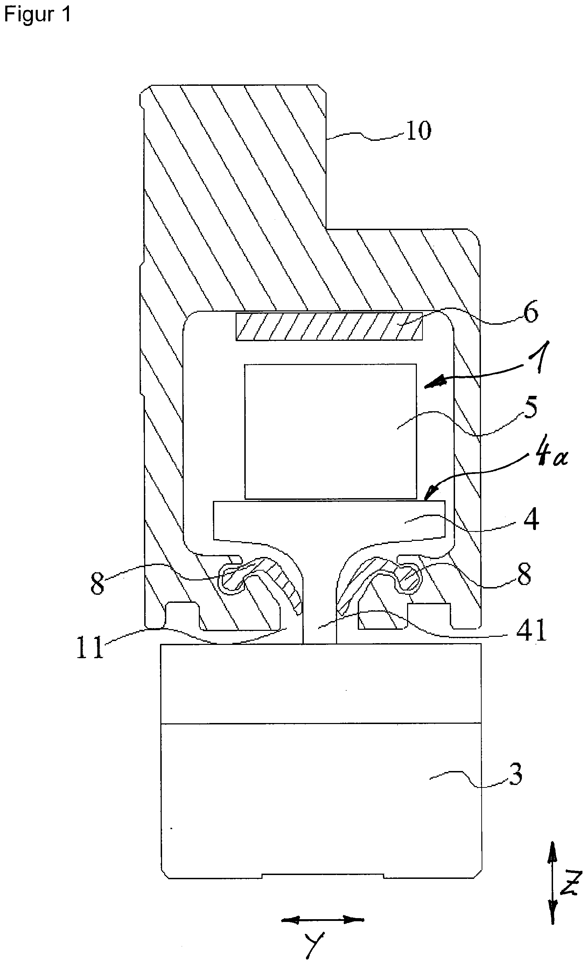

Zur Klarstellung der räumlichen Lagebeziehung der Teile des Linearcodierers werden nachfolgend die Begriffe "unten" und "oben" verwendet. Diese Begriffe beziehen sich auf die in den Figuren 1 und 2 dargestellte Lage des Linearcodierers.

Die Abtast-Baueinheit 1 besteht aus einem Abtastkopf 5, der zur Erzeugung von positionsabhängigen Messsignalen den Maßstab 6 berührungslos abtastet. Der Abtastkopf 5 ist an einer Fläche 4a des Trägers 4 befestigt. Der Träger 4 ist wiederum über einen schwertförmigen Mitnehmer 41 an einem Montagefuß 3 befestigt. Der Montagefuß 3 ist zur Befestigung der Abtast-Baueinheit 1 am zweiten zu messenden Maschinenteil ausgebildet. Hierzu weist er mehrere Löcher 31 auf, durch die Befestigungsschrauben führbar sind.

Der Maßstab 6 ist an seiner Oberseite im Inneren des Gehäuses 10 über einen Klebstoff parallel zu seiner Oberseite fixiert. Dieser Klebstoff verfügt über Elastizität, wodurch unterschiedliche Ausdehnungen und Kontraktionen zwischen dem Gehäuse 10 und dem Maßstab 6 aufgrund von Temperaturveränderungen absorbiert werden können.

Der Maßstab 6 ist beispielsweise aus einem Glasmaterial. An der zu der Verklebefläche entgegengesetzten Seite des Maßstabs 6 ist ein Muster aufgebracht, auch Messteilung genannt. Dieses Muster ist zum Beispiel durch Aufdampfen eines Metallmaterials wie Chrom und eine Musterung oder eine Ätzung in einem nachfolgenden Prozess gebildet. Der Maßstab 6 kann auch aus einem Metallmaterial gebildet sein, doch ist von den Gesichtspunkten einer geringen Beeinflussung durch Wärme, der Ausführbarkeit mit einer hohen Präzision, der Leichtigkeit der Musterbildung und dergleichen ein Material auf Glasbasis überlegen.

Unter dem Maßstab 6 ist der Abtastkopf 5 über einen konstanten Spalt hinweg angeordnet. Dieser Abtastkopf 5 enthält einen optischen Sensor zum Lesen des Musters, das auf dem Maßstab 6 ausgebildet ist, sowie eine Lichtquelle und elektronische Schaltungen zur Verarbeitung der erfassten positionsabhängigen elektrischen Signale, die von dem Sensor ausgegeben werden. Das Konstanthalten des Abstands zwischen der Unterseite des Maßstabs 6 und der Oberseite des Abtastkopfes 5, das heißt, des Spalts, ist ein äußerst wichtiger Faktor, um die von dem Abtastkopf 5 ausgegebenen Lesesignale zu stabilisieren, einen Fehlbetrieb zu verhindern und die Genauigkeit konstant beizubehalten.

Der Abtastkopf 5 ist an einem Träger 4, das die Haltebasis darstellt, angeordnet und z. B. durch Schrauben daran fixiert. In dem unteren Bereich des Trägers 4 verläuft ein Mitnehmer 41, der in der Fortbewegungsrichtung - also in X-Richtung - schwertförmig bzw. schneidenförmig dünner wird, nach unten in Richtung des Montagefußes 3. Der Mitnehmer 41 ist einstückig mit dem Montagefuß 3 gekoppelt.

In dem unteren Bereich des Gehäuses 10 ist eine schlitzförmige Öffnung 11 gebildet, damit der Mitnehmer 41 hindurchgeführt werden kann. In der Öffnung 11 sind zur Verhinderung des Eindringens von Staub in das Innere des Gehäuses 10 an beiden Seiten Lippendichtungen 8 zur Abdichtung angeordnet, die sich an Stellen, an denen sich der Mitnehmer 41 nicht befindet, in dem Mittelbereich der Öffnung 11 schließen, wodurch die Dichtheit des Gehäuseinneren erhöht wird. Um den Gleitwiderstand in Bezug auf diese Lippendichtungen 8 zu verringern und Messungen mit einer hohen Präzision auszuführen, ist der Mitnehmer 41 in diesem Durchgangsbereich möglichst dünn auszubilden (in Y-Richtung betrachtet).

Erfindungsgemäß ist nun ein Schwingungsdämpfer 2 an dem Träger 4 angeordnet. In vorteilhafter Weise ist der Schwingungsdämpfer 2 gemäß der Figur 2 angeordnet, d. h., dass er zusammen mit dem Abtastkopf 5 in Bezug auf die Messrichtung X längs gereiht ist. Dieser Schwingungsdämpfer 2 besteht aus einer Dämpfermasse 21 und einem elastischen Element 22 zwischen der Dampfermasse 21 und dem Träger 4. Das elastische Element 22 ist insbesondere ein klebendes elastisches Element 22, das an die obere Fläche 4a des Trägers 4 geklebt und die Dämpfermasse 21 damit daran fixiert ist. Dieses klebende elastische Element 22 ist in diesem Beispiel ein Klebstoff auf Acrylbasis, an dem das aus Eisen gebildete Schwingungsdämpferelement 21 fixiert ist.

Da der Schwingungsdämpfer 2 zusammen mit dem Abtastkopf 5 auf dem Träger 4 angeordnet ist, kann er die Resonanzerscheinung der Abtast-Baueinheit 1 wirksam unterdrücken. Er ist insbesondere wirksam, um ein Querschwenken in Bezug auf die Messrichtung X zu unterdrücken. Da die Dämpfermasse 21 nur über das klebende elastische Element 22 auf dem Träger 4 angeordnet und fixiert ist, ist auch die Anbringung einfach und kann auch an bereits bestehende Linearcodierer mit geringem Aufwand vorgenommen werden.

Um die vorteilhafte Wirkung der Erfindung zu belegen, wurde ein Linearcodierer gemäß der Erfindung aufgebaut und damit Versuche durchgeführt (Versuchsstück der Erfindung). Für die Dämpfermasse 2 wurde ein viereckiger blockförmiger Edelstahlkörper verwendet, während für das klebende elastische Element 22 ein Klebeband auf Acrylbasis mit einer Dicke in einem Bereich von 0,1 bis 1 mm verwendet wurde. Der mit dem Schwingungsdämpfer 2 versehene Linearcodierer wurde auf einer Schwingvorrichtung angeordnet und fixiert. An dem Abtastkopf 5 wurde ein Beschleunigungssensor zur Schwingungsdetektion angebracht und es wurden an dem Montagefuß 3 Schwingungen in einem für die Verwendung des Linearcodierers angenommenen Bereich von 50 bis 200 m/s² vorgenommen, und die Resonanzerscheinung unter Veränderung der Schwingungsperiode in einem Frequenzberiech von 55 bis 2000 Hz gemessen.

Zum Vergleich wurde ein Linearcodierer ohne dem Schwingungsdämpfer 2 aufgebaut, der aber ansonsten den gleichen Aufbau aufwies und es wurden die gleichen Messungen vorgenommen (Vergleichsversuchsstück).

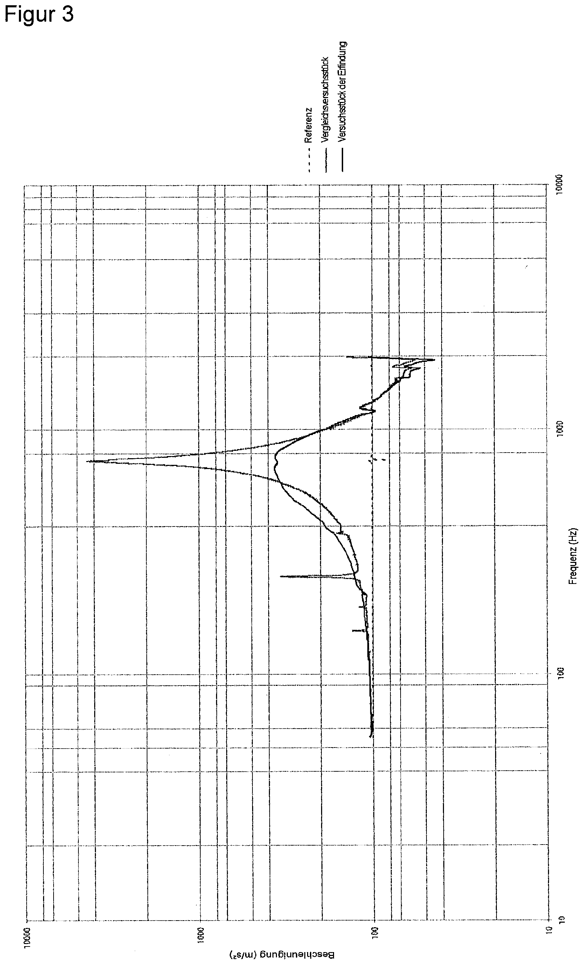

Die Ergebnisse der Messungen sind in Figur 3 gezeigt. In der Figur 3 ist die durch die Schwingungsvorrichtung ausgeübte Beschleunigung mit "Referenz" angegeben, und es sind die gemessenen Beschleunigungen am Abtastkopf 5 in Bezug auf diese Schwingung mit "Versuchsstück der Erfindung" bzw. "Vergleichsversuchsstück" aufgetragen.

Wie man aus Figur 3 erkennt, ist die Spitzenstärke an dem Resonanzpunkt bei dem Versuchsstück der Erfindung - also mit dem Schwingungsdämpfer 2 - verglichen mit dem Vergleichsversuchsstück auf 1/10 gedrückt.

Die oben beispielhaft dargestellte Anordnung des Schwingungsdämpfers 2 in Messrichtung X gereiht zum Abtastkopf 5 erlaubt eine besonders raumsparende Bauweise im Inneren des Gehäuses 10. Steht genügend Raum im Gehäuse 10 zur Verfügung, dann kann der Schwingungsdämpfer 2 alternativ auch in Y-Richtung neben dem Abtastkopf 5 oder alternativ an dem Abtastkopf 5 angeordnet sein.

Der beispielhaft beschriebene Linearcodierer arbeitet nach dem optischen Abtastprinzip. Die Erfindung ist aber nicht darauf beschränkt, sondern es sind auch andere berührungslose Abtastprinzipien wie magnetische oder induktive möglich.

## Patentansprüche

1. Linearcodierer, mit
einem Maßstab (6) innerhalb eines Gehäuses (10);
einer Abtast-Baueinheit (1), die in Messrichtung (X) relativ zum Maßstab (6) verschiebbar ist, umfassend
• einen Abtastkopf (5), der zur Abtastung des Maßstabs (6) diesem gegenüber liegend innerhalb des Gehäuses (10) angeordnet ist und,
• einen Träger (4) an dem der Abtastkopf (5) befestigt ist,
• einen Mitnehmer (41), über den der Träger (4) mit einem außerhalb des Gehäuses (10) angeordneten Montagefuß (3) gekoppelt ist, wobei der Mitnehmer (41) durch eine schlitzförmige Öffnung (11) des Gehäuses (10) hindurchgeführt ist und der Montagefuß (3) zur Befestigung an einem zu messenden Maschinenteil ausgebildet ist.
**dadurch gekennzeichnet, dass**
innerhalb des Gehäuses (10) an dem Träger (4) oder an dem Abtastkopf (5) ein Schwingungsdämpfer (2) angeordnet ist, der Schwingungen quer zur Messrichtung (X) unterdrückt, wobei der Schwingungsdämpfer (2) durch eine Dämpfermasse (21) und ein elastisches Element (22) gebildet ist, wobei das elastische Element (22) zwischen dem Träger (4) und der Dämpfermasse (21) oder zwischen dem Abtastkopf (5) und der Dämpfermasse (21) eingefügt ist, und wobei die Dämpfermasse (21) mittels des elastischen Elementes (22) an einer Anbringungsfläche (4a) des Trägers (4) oder des Abtastkopfes (5) befestigt ist, indem es selbst als Klebstoff wirkt

2. Linearcodierer nach einem der vorhergehenden Ansprüche, wobei der Abtastkopf (5) keinen Kontakt zum Maßstab (6) hat und direktam Mitnehmer (41) befestigt ist.

3. Linearcodierer nach einem der vorhergehenden Ansprüche, wobei der Mitnehmer (41) in Messrichtung (X) verlaufend schwertförmig und biegesteif ausgebildet ist und in einer zweiten Richtung (Y), die senkrecht zur Messrichtung (X) verläuft, relativ dünn ausgeführt ist, und wobei das elastische Element (22) derart angeordnet und ausgebildet ist, dass es eine Bewegung der Dämpfermasse (21) in der zweiten Richtung (Y) freigibt.

4. Linearcodierer nach Anspruch 3, wobei die Anbringungsfläche (4a) eine Ebene ist, aufgespannt durch die Messrichtung (X) und die zweite Richtung (Y).

5. Linearcodierer nach einem der vorhergehenden Ansprüche, wobei das elastische Element (22) eine Klebstoffschicht zwischen dem Träger (4) und der Dämpfermasse (21) ist.

6. Linearcodierer nach Anspruch 5, wobei der Klebstoff auf Acrylbasis ist und durch seine eigene Klebekraft an der Anbringungsfläche (4a) fixiert ist.

7. Linearcodierer nach einem der vorhergehenden Ansprüche, wobei der Schwingungsdämpfer (2) an einer Stelle am Träger (4) angeordnet ist, die in Bezug auf den Abtastkopf (5) in Messrichtung (X) längs gereiht ist.

## Claims

1. Linear encoder, having
a scale (6) within a housing (10);
a scanning unit (1), which can be displaced relative to the scale (6) in the measuring direction (X), comprising
• a scanning head (5) which, to scan the scale (6), is arranged opposite the latter within the housing (10), and
• a carrier (4) to which the scanning head (5) is fixed,
• a driver (41), via which the carrier (4) is coupled to a mounting foot (3) arranged outside the housing (10), wherein the driver (41) is led through a slot-like opening (11) in the housing (10) and the mounting foot (3) is formed to be fixed to a machine part to be measured,
**characterized in that**
within the housing (10), on the carrier (4) or on the scanning head (5), there is arranged a vibration damper (2) which suppresses vibrations transversely with respect to the measuring direction (X), wherein the vibration damper (2) is formed by a damper mass (21) and a resilient element (22), wherein the resilient element (22) is inserted between the carrier (4) and the damper mass (21) or between the scanning head (5) and the damper mass (21), and wherein the damper mass (21) is fixed by means of the resilient element (22) to an attachment surface (4a) of the carrier (4) or the scanning head (5), **in that** it itself acts as an adhesive.

2. Linear encoder according to one of the preceding claims, wherein the scanning head (5) has no contact with the scale (6) and is fixed directly to the driver (41).

3. Linear encoder according to one of the preceding claims, wherein the driver (41) is formed so as to extend in the manner of a sword in the measuring direction (X) and is flexurally rigid, and is designed to be relatively thin in a second direction (Y), which extends at right angles to the measuring direction (X), and wherein the resilient element (22) is arranged and formed in such a manner that it enables a movement of the damper mass (21) in the second direction (Y).

4. Linear encoder according to Claim 3, wherein the attachment surface (4a) is a plane spanned by the measuring direction (X) and the second direction (Y) .

5. Linear encoder according to one of the preceding claims, wherein the resilient element (22) is an adhesive layer between the carrier (4) and the damper mass (21).

6. Linear encoder according to Claim 5, wherein the adhesive is acrylic-based and is fixed to the attachment surface (4a) by its own adhesive force.

7. Linear encoder according to one of the preceding claims, wherein the vibration damper (2) is arranged at a point on the carrier (4) which is aligned longitudinally in relation to the scanning head (5) in the measuring direction (X).

## Revendications

1. Codeur linéaire, comprenant
une jauge (6) à l'intérieur d'un boîtier (10) ;
un module de palpage (1) qui peut coulisser dans une direction de mesure (X) par rapport à la jauge (6), comportant
* une tête de palpage (5) qui est disposée à l'opposé de la jauge (6) à l'intérieur du boîtier (10) en vue de palper celle-ci et
* un élément porteur (4) auquel est fixée la tête de palpage (5),
* un élément d'entraînement (41) par le biais duquel l'élément porteur (4) est accouplé à un pied de montage (3) disposé à l'extérieur du boîtier (10), l'élément d'entraînement (41) étant passé à travers une ouverture (11) en forme de fente du boîtier (10) et le pied de montage (3) étant configuré pour une fixation à une partie de machine à mesurer,
**caractérisé en ce que**
un amortisseur de vibrations (2) est disposé à l'intérieur du boîtier (10) sur l'élément porteur (4) ou sur la tête de palpage (5), lequel supprime les vibrations transversalement à la direction de mesure (X), l'amortisseur de vibrations (2) étant formé par une masse d'amortissement (21) et un élément élastique (22), l'élément élastique (22) étant inséré entre l'élément porteur (4) et la masse d'amortissement (21) ou entre la tête de palpage (5) et la masse d'amortissement (21), et la masse d'amortissement (21) étant fixée au moyen de l'élément élastique (22) à une surface de montage (4a) de l'élément porteur (4) ou de la tête de palpage (5) en agissant elle-même comme substance adhésive.

2. Codeur linéaire selon l'une des revendications précédentes, la tête de palpage (5) ayant un contact avec la jauge (6) et étant fixée directement à l'élément d'entraînement (41).

3. Codeur linéaire selon l'une des revendications précédentes, l'élément d'entraînement (41) étant configuré en forme de sabre et rigide à la flexion dans la projection de la direction de mesure (X) et étant réalisé relativement mince dans une deuxième direction (Y) qui s'étend perpendiculairement à la direction de mesure (X), et l'élément élastique (22) étant disposé et configuré de telle sorte qu'il libère un mouvement de la masse d'amortissement (21) dans la deuxième direction (Y).

4. Codeur linéaire selon la revendication 3, la surface de montage (4a) étant un plan qui s'étend à travers la direction de mesure (X) et la deuxième direction (Y).

5. Codeur linéaire selon l'une des revendications précédentes, l'élément élastique (22) étant une couche de substance adhésive entre l'élément porteur (4) et la masse d'amortissement (21).

6. Codeur linéaire selon la revendication 5, la substance adhésive étant à base d'acrylique et étant fixée à la surface de montage (4a) par sa propre force d'adhérence.

7. Codeur linéaire selon l'une des revendications précédentes, l'amortisseur de vibrations (2) étant disposé à un endroit sur l'élément porteur (4) qui est aligné longitudinalement dans la direction de mesure (X) en référence à la tête de palpage (5).
